Europäisches Patentamt

European Patent Office

Office européen des brevets

(11) Numéro de publication: **0 172 308**
**A1**

## (12) DEMANDE DE BREVET EUROPEEN

(21) Numéro de dépôt: 85103535.2

(22) Date de dépôt: 26.03.85

(51) Int. Cl.⁴: **H 01 M 6/14**
**H 01 M 4/06**

(30) Priorité: 28.03.84 FR 8404839

(43) Date de publication de la demande:
26.02.86 Bulletin 86/9

(84) Etats contractants désignés:
AT BE CH DE FR GB IT LI LU NL SE

(71) Demandeur Société Anonyme dite SAFT
156, avenue de Metz
F-93230 Romainville(FR)

(72) Inventeur: Jumel, Yves
2, avenue Robert Schuman
F-86000 Poitiers(FR)

(74) Mandataire: Weinmiller, Jürgen et al,
Zeppelinstrasse 63
D-8000 München 80(DE)

(54) Generateur electrochimique de grande energie specifique, a impedance initiale reduite.

(57) Générateur électrochimique de grande énergie spécifique à impédance initiale réduite.

L'invention concerne les générateurs électrochimiques, dont la matière active négative (4) est à base d'un métal alcalin ou alcalino-terreux, dont l'électrolyte est liquide et non aqueux, et dont la cathode (5) est solide.

La face de la cathode tournée vers l'électrolyte est revêtue d'un dépôt métallique poreux (12) dont l'épaisseur est de l'ordre de quelques microns, qui ne participe pas à la réaction électrochimique.

L'impédance initiale du générateur est ainsi notablement réduite.

FIG.1

EP 0 172 308 A1

Générateur électrochimique de grande énergie spécifique, à impédance initiale réduite

La présente invention concerne un générateur électrochimique de grande énergie spécifique à impédance initiale réduite.

Il s'agit d'un générateur, dont la matière active négative est à base d'un métal alcalin ou alcalino-terreux, l'électrolyte un liquide non aqueux organique ou inorganique, et dont l'électrode positive comporte une masse active solide ; cette masse peut être un matériau solide inerte (un cathecter) et une matière active solide à base d'oxydes (de plomb - cuivre - manganèse, etc...), de sulfures (de fer, etc....), ou de sels oxydés (de chrome, molybdène, etc...).

Les matières actives positives ne sont généralement pas électroniquement conductrices et il faut leur adjoindre un conducteur électronique pour que l'électrode positive ait une conductivité électronique acceptable vis-à-vis des courants demandés, sans toutefois présenter une tension initiale trop élevée incompatible avec les utilisations.

Dans le brevet français FR-A-2 316 756, on décrit diverses compositions de masses actives positives destinées à résoudre ce problème.

On a notamment ajouté dans les masses actives positives, avec des proportions pouvant aller de 10% à 20% en poids, des agents réducteurs qui participent à la réaction électrochimique.

Toutefois, dans le cas d'applications particulières, où il est nécessaire d'obtenir immédiatement un niveau d'impédance aussi bas que possible ou proche de la valeur moyenne en décharge, les moyens décrits précédemment sont insuffisants, car l'impédance initiale des générateurs ainsi obtenus est élevée.

La présente invention se propose de remédier à cet inconvénient et de fournir un générateur électrochimique de faible impédance initiale et dont la tension initiale soit pratiquement confondue avec la tension du palier.

La présente invention a pour objet un générateur électrochimique de grande énergie spécifique, comportant une matière active négative à base d'un métal alcalin ou alcalino-terreux, un séparateur, un électrolyte liquide non aqueux, et une électrode positive comprenant une masse active solide, caractérisé par le fait que ladite masse positive est munie, du côté de l'électrolyte, d'un revêtement métallique poreux et conducteur électronique, ne participant pas à la réaction électrochimique, dont l'épaisseur est de l'ordre de quelques microns, et qui est en contact avec les parties métalliques servant de collecteur de courant positif.

Ce revêtement métallique recouvre la masse solide de l'électrode quel que soit l'aspect superficiel de celle-ci ; il se trouve aussi bien sur des "aspérités" que dans des "crevasses".

La réalisation d'un tel revêtement, assurant la continuité électronique tout en conservant une certaine porosité, peut avantageusement se faire par métallisation sous vide ou par toute autre méthode connue de l'homme de l'art pour projeter ou déposer des métaux ou leurs alliages sous forme liquide ou gazeuse.

Les métaux compatibles pour la réalisation d'un tel dépôt sont choisis dans le groupe constitué par le plomb, l'étain, l'or, le bismuth, le zinc, le cadmium, l'aluminium, ce dernier étant particulièrement bien adapté et maîtrisé pour la réalisation d'un dépôt par métallisation sous vide.

Ce revêtement poreux situé à distance minimale de l'anode diminue la chute ohmique pure du système ; de plus il augmente le nombre initial de sites réactionnels, diminuant ainsi la polarisation du système électrochimique. Les valeurs de la chute ohmique et de la polarisation étant les paramètres déterminants de l'impédance du générateur, cette dernière se trouve ainsi fortement diminuée et permet au générateur d'atteindre presque immédiatement un état stationnaire.

D'autres caractéristiques et avantages de la présente invention apparaîtront au cours de la description suivante d'un mode de réalisation donné à titre illustratif mais nullement limitatif. Dans le dessin annexé :

- la figure 1 est une vue schématique en coupe d'un générateur électrochimique selon l'invention, du genre pile au lithium,

- la figure 2 montre pendant les premières minutes de la décharge les variations en fonction du temps t, de la tension V et de l'impédance Z de piles selon l'art antérieur et de piles selon l'invention,

- la figure 3 montre des courbes analogues à celles de la figure 2, mais la durée de la décharge est de l'ordre de plusieurs dizaines de jours.

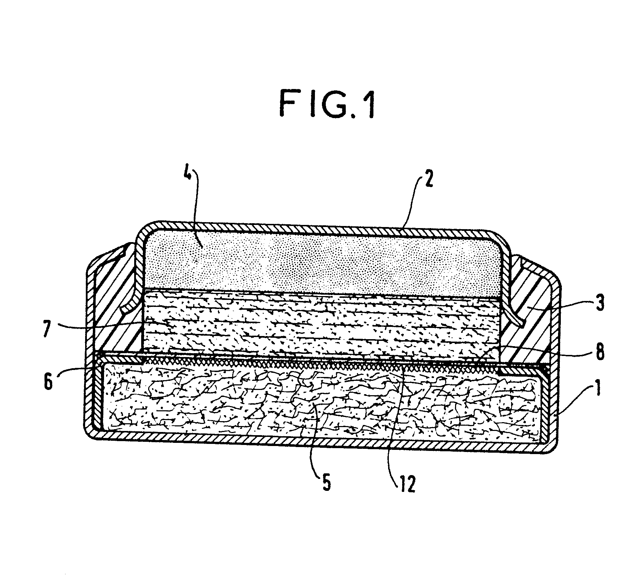

On a testé des piles du genre de celle de la figure 1. Il s'agit d'une pile bouton de diamètre 11,5 mm et d'épaisseur 5,4 mm.

L'enveloppe de la pile est composée d'une coupelle négative 2 et d'une coupelle positive 1, toutes deux métalliques, par exemple en inox. L'électrode négative 4 à base de lithium est logée dans la coupelle 2. Une masse positive 5 logée dans la coupelle 1 est maintenue en place par un anneau métallique 6 ; elle est séparée de l'électrode négative 4 par un séparateur formé de plusieurs couches 7 de feutre cellulosique et d'une feuille 8 microporeuse. Ce séparateur est imprégné d'un électrolyte liquide organique.

L'étanchéité de l'ensemble est obtenue par la mise en oeuvre d'un joint 3 en polypropylène.

La masse positive 5 est un mélange comprimé de poudres de plomb et de bismuthate de plomb, les poudres de plomb constituant des agents réducteurs participant à la réaction électrochimique, cette masse, légèrement supérieure à 1 gramme, est une pastille de 8,7 mm de diamètre et de 1,35 mm d'épaisseur.

Selon l'invention, la face de la masse positive 5 tournée vers le séparateur 7 est munie d'un revêtement poreux 12 en aluminium, dont l'épaisseur est de quelques microns et qui a été déposé par métallisation sous vide. Ce revêtement est en contact avec l'anneau métallique 6, lui-même en contact avec la coupelle positive 1 qui sert de borne à la pile.

Pour un revêtement de deux microns d'épaisseur, la masse d'aluminium est environ de l'ordre de 0,9 mg, c'est-à-dire inférieure à 0,1% de la masse active positive.

On a réalisé trente piles selon l'art antérieur, c'est-à-dire sans revêtement 12, et trente piles selon l'invention.

Le tableau 1 reprend les valeurs d'impédance mesurées avant mise en décharge de ces piles. (Ces valeurs et leurs écarts sont des moyennes arithmétiques).

TABLEAU I

|  | Impédance initiale | Dispersion |
|---|---|---|
| PILES ART ANTERIEUR | 512 $\Omega$ | ± 132 $\Omega$ |
| PILES SELON L'INVENTION | 210 $\Omega$ | ± 42 $\Omega$ |

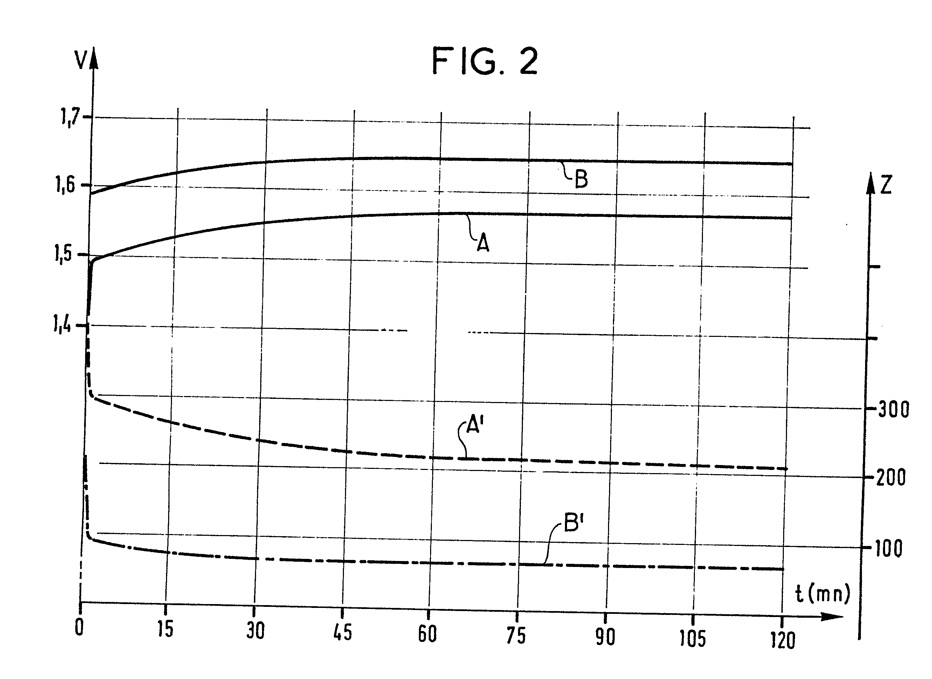

Si l'on se reporte à la figure 2, on voit l'évolution en fonction du temps t (en minutes) de la tension V (en volts) et de l'impédance Z (en ohms) :
- pour les piles de l'art antérieur (courbes de tension A et d'impédance A'),
- pour les piles selon l'invention (courbes de tension B et d'impédance B').
La décharge est effectuée sur une résistance de 5 K $\Omega$.

L'examen du tableau I et de là figure 2 montre clairement l'intérêt du revêtement 12 qui donne aux piles des caractéristiques initiales nettement améliorées et pratiquement identiques à celles d'une pile à l'état stationnaire.

Il est également primordial de signaler que l'existence du revêtement selon l'invention ne pénalise en aucun cas les performances volumiques du système électrochimique concerné. Ce point constitue le deuxième avantage essentiel de l'invention. En effet, dans pratiquement tous les systèmes à anode de lithium - électrolyte organique ou inorganique - composé à base d'oxydes, sulfures, sels oxydés de chrome, molybdène, etc...., les réactions électrochimiques, induites par la mise en décharge des systèmes, se concrétisent par une accumulation des produits de décharge dans la cathode ; ce phénomène entraîne, même en présence d'une porosité initiale importante, une augmentation importante du volume de la cathode, augmentation pouvant atteindre jusqu'à 100% du volume initial selon les systèmes mis en jeu. Cette augmentation thermodynamique est inéluctable, et toute limitation de celle-ci se traduit d'abord par une polarisation excessive du système (dûe à la diminution du nombre des sites actifs) puis par un arrêt prématuré de la décharge par blocage de la réaction.

Selon l'invention, si le revêtement métallique déposé est suffisant pour assurer un démarrage optimal du système, en aucun cas il ne constitue un frein à l'expansion de la cathode pendant la décharge du générateur électrochimique.

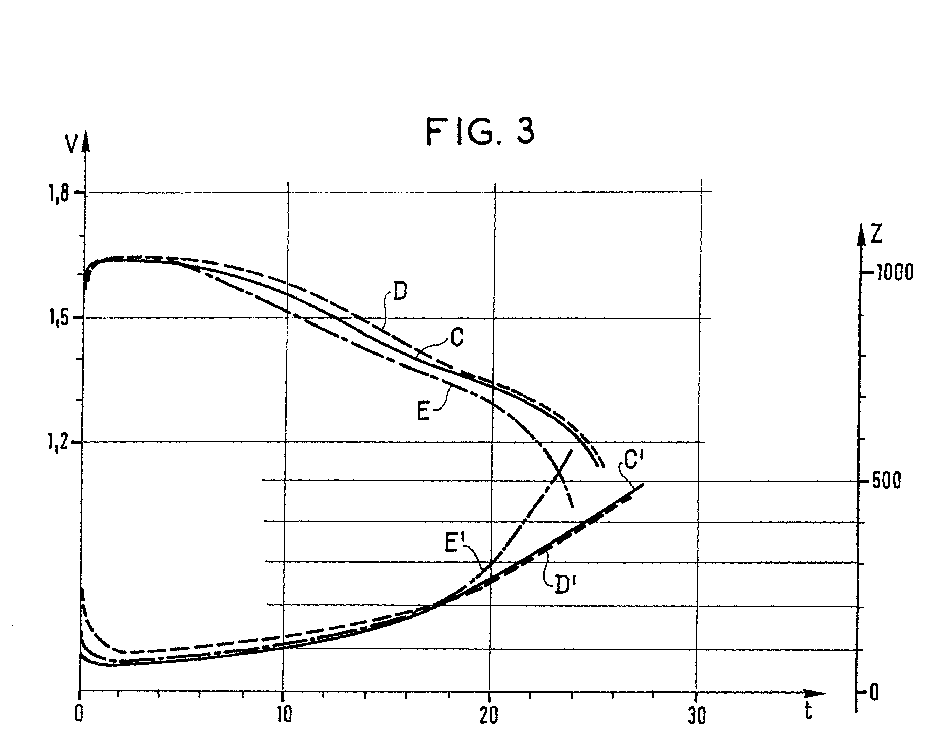

La figure 3 permet de bien matérialiser l'explication ci-dessus. Dans cette figure, sont représentées les courbes de tension V (D, E, C) et d'impédance Z (D', E', C') obtenues en décharge sur des piles identiques à celles décrites précédemment. Le temps t est exprimé en jours.

Les courbes D, D' représentent les caractéristiques obtenues sur des piles de l'art antérieur ; les courbes E, E' représentent les caractéristiques obtenues avec des piles de l'art antérieur où la cathode est recouverte d'une fine grille métallique tissée ; les courbes C, C' représentent les caractéristiques obtenues avec des piles selon l'invention.

On peut constater que, si un artifice mécanique (tel qu'une grille, une fine feuille d'un métal perforé) permet également d'améliorer les caractéristiques initiales de la pile, il ne permet d'obtenir un rendement optimal à cause de la perturbation mécanique qu'il introduit dans le système. Dans les piles selon l'invention, aucune perte sensible n'est constatée.

Bien entendu l'invention n'est nullement limitée à l'exemple qui a été développé. On pourra remplacer tout moyen par un moyen équivalent, sans sortir du cadre de l'invention.

- 6 -

0172308

REVENDICATIONS

1/ Générateur électrochimique de grande énergie spécifique, comportant une matière active négative (4) à base d'un métal alcalin ou alcalino-terreux, un séparateur, un électrolyte liquide non aqueux, et une électrode positive comprenant une masse active solide (5), caractérisé par le fait que ladite masse positive (5) est munie, du côté de l'électrolyte, d'un revêtement métallique poreux (12) et conducteur électronique, ne participant pas à la réaction électrochimique, dont l'épaisseur est de l'ordre de quelques microns, et qui est en contact avec les parties métalliques (6) servant de collecteur de courant positif.

2/ Générateur électrochimique selon la revendication 1, caractérisé par le fait que ledit revêtement est du type dépôt par métallisation sous vide.

3/ Générateur électrochimique selon l'une des revendications 1 et 2, caractérisé par le fait que le métal dudit revêtement est choisi dans le groupe constitué par le plomb, l'étain, l'or, le bismuth, le zinc, le cadmium, l'aluminium et leurs alliages.

4/ Générateur électrochimique selon l'une des revendications 1 à 3, caractérisé par le fait que ladite masse positive comprend une matière active choisie dans le groupe des oxydes métalliques, des sulfures métalliques et des sels oxydés.

# FIG.1

# FIG. 2

0172308

0172308

FIG. 3

Office européen
des brevets

RAPPORT DE RECHERCHE EUROPEENNE

0172308

Numero de la demande

EP    85 10 3535

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl 4) |
|---|---|---|---|
| Y | GB-A-2 007 903  (UNION CARBIDE)<br>* Page 2, lignes 51-128 * | 1-4 | H 01 M    6/14<br>H 01 M    4/06 |
| Y | FR-A-2 288 401  (S.A.F.T.)<br>* Page 1; page 3, lignes 32-40; page 4, lignes 7-18; revendications * | 1-4 | |
| Y | DE-A-2 637 423  (LECLANCHE)<br>* Revendication 1; page 7; page 9, alinéas 1-3 * | 1,3,4 | |
| Y | FR-A-2 274 143  (K.K. DAINI SEIKOSHA)<br>* Page 2, lignes 14-33; page 3, lignes 16-35 * | 2 | |
| Y | PATENTS ABSTRACTS OF JAPAN, vol. 6, no. 222 (E-140)[1100], 6 novembre 1982; & JP - A - 57 124 853 (DAINI SEIKOSHA K.K.) 03-08-1982<br>* En entier * | 1,3,4 | **DOMAINES TECHNIQUES RECHERCHES (Int Cl 4)**<br><br>H 01 M    6/14<br>H 01 M    4/06 |
| Y | PATENTS ABSTRACTS OF JAPAN, vol. 6, no. 6 (E-89)[884], 14 janvier 1982; & JP - A - 56 128 574 (HITACHI MAXELL K.K.) 08-10-1981<br><br>---                  -/- | 1,4 | |

Le présent rapport de recherche a été établi pour toutes les revendications

| Lieu de la recherche | Date d'achevement de la recherche | Examinateur |
|---|---|---|
| LA HAYE | 22-07-1985 | DE VOS L.A.R. |

**Office européen
des brevets**

**RAPPORT DE RECHERCHE EUROPEENNE**

**0172308**
Numéro de la demande

EP 85 10 3535

## DOCUMENTS CONSIDERES COMME PERTINENTS

Page 2

| Catégorie | Citation du document avec indication en cas de besoin des parties pertinentes | Revendication concernee | CLASSEMENT DE LA DEMANDE (Int Cl 4) |
|---|---|---|---|
| D,A | FR-A-2 316 756 (S.A.F.T.)<br>* Page 1, lignes 5-9; page 3, revendications * | 1,3,4 | |
| A | US-A-4 048 403 (MARVIN LEE KRONENBERG)<br>* Abrégé; colonne 7, exemple III * | 1,3,4 | |
| P,X | EP-A-0 129 880 (RAYOVAC)<br>* Abrégé; page 2, lignes 18-23; page 3, lignes 1-18 * | 1 | |

DOMAINES TECHNIQUES
RECHERCHES (Int. Cl.4)

Le present rapport de recherche a ete etabli pour toutes les revendications

| Lieu de la recherche | Date d'achevement de la recherche | Examinateur |
|---|---|---|
| LA HAYE | 22-07-1985 | DE VOS L.A.R. |